# EUROPEAN PATENT APPLICATION

(11) **EP 2 181 574 A1**
(43) Date of publication of application: **05.05.2010**
(21) Application number: 08018953.3
(22) Date of filing: 30.10.2008
(51) Int. Cl.: A01C 1/06

(54) **Process for "full-field" implantation and cultivation of caper**

(71) Applicant: Inagriprod S.r.l., 70125 Bari (IT)
(72) Inventor: Macchia, Francesco, 70125 Bari (IT)
(74) Representative: Trupiano, Federica

(57) **Abstract**

Process for the treatment of caper seeds able to guarantee a significant increase in germinability of the seeds, which can therefore be sown outdoorwith very low mortality rate.

## Description

### STATE OF THE ART

The present invention concerns a process for the planting and outdoor cropping of caper.

The caper (*Capparis spinosa L subsp. rupestris (SM.) Nyman* is a plant belonging to the Capparidaceae family, and is a small shrub that grows near walls and crags. This small shrub native to Mediterranean basin and central-southern Asia, is very widespread also in Italy. It can reach a height of one metre and generally develops as ground cover or on dry stone walls or along cracks in rocks. It has a rambling, very branched and dense appearance; the leaves are rounded, leathery, dark green in colour and waxy; the flowers, which are large, decorative, white or pink in colour and very showy, blossom in the summer. The flower buds and unripe fruits, which are preserved in vinegar or salt, are used in cooking; they have a very intense pungent flavour and are eaten as they are or used in the preparation of sauces and condiments.

In terms of its phenological cycle, the plant is dormant during the cold months and resumes its vegetative activity in the spring, flowering in May and June. Flowering continues throughout the summer in conditions of favourable humidity, reflowering in late summer and then gradually tailing off as autumn arrives.

In nature the caper seeds are enclosed in a fleshy berry which, when ripe, opens through dorsal crevice. The seeds are dispersed by zoochory, i.e. by animals. Caper seeds can be dispersed in particular by endozoochory or myrmecochory. The term endozoochory indicates dispersion of seeds via excrement. The term myrmecochory indicates the dispersal of seeds by ants. The latter is the most effective method as the ants transport the seeds into ravine and fracture where germination conditions are optimal.

Compatibly with the phenological cycle of the plant, various propagation methods have been developed. Although it is a rupicolous plant, the caper benefits from outdoor cropping and is seed-propagated or preferably by cuttings.

The term cutting indicates a fragment of a cut branch and planted in the ground to regenerate the missing parts, thus producing a new specimen.

According to common knowledge, cutting of caper plant is carried out in the summer, removing a piece of 7-10 cm from a 1 year old woody branch. The cutting is then planted in a box filled with peat and sand. Rooting hormones (AIA, IBA) are widely used to aid rooting and taking. Once the roots have developed, the plants are transferred and putted into individual pots or planted outdoor.

As previously mentioned it also exists seed-propagated, but this is very difficult and various methods exist but none of them are objectively very effective. The literature reports a very low seed germination rate, in the order of 5-10%, while an increasing of margin of this share is noted when sowing is carried out in the winter between December and January. The sowing is carried out in boxes, filled with peat and sand, left outside in the summer and sheltered in the autumn-winter. The following spring the new plant can be transplanted directly into the ground or individually into a pot. The sowing can also be made directly in the fractures of dry stone walls exposed to the sun in the autumn.

Sowing in common practice is performed in well-drained garden soil, in the sun and in a sheltered position. Alternatively, the sowing can be performed in the same period in a cold box or in a greenhouse. When the propagation is performed by seed, large quantities of seed are used in view of their low rate of germination. Although the caper plant belongs to xerophilous plant, i.e. plant adapts to live in environments characterised by long periods of drought or by a dry or desert climate (generically defined xeric environments), it is very difficult to induce its germination, both to its particular phenological cycle characterised by phases of dormancy, and to the particular environmental and climatic conditions that favour this phase. The particularly problematic aspect is therefore not the growth of the plant but its germination and rooting.

As described above, another way of propagating capers is to use woody cuttings, i.e. fragments of the plant purposely cut and planted in soil or water to regenerate the missing parts and then replanted in the ground. Like direct sowing, this method also has problems connected with rooting in the soil.

Therefore, for the above reasons, caper-culture installation is obtained by plants by vegetative multiplication form cuttings. With this system, however direct seeding is difficult and consequently involves a low survival rate. The mortality of cuttings is very high, even about 50-60%. Order to limit this phenomenon, the cuttings transplanted are usually provided with aid irrigation which reduces the mortality to approximately 20% at best, but this is insufficient to solve the problem of rooting. The best conditions for rooting occur in the spring, the optimal period being between March and April. As regards growth of the plants once they have rooted, caper plants require very sunny positions to best develop, since they are Mediterranean plants that like very hot summers with temperatures even above 35-40°C, and mild winters, although they can withstand brief periods of frost if not too intense. They do not require much water and prefer dryness to over-watering.

Since capers like the sun and grow best in sheltered positions, in nature caper plants are often found on south-facing walls.

It would therefore appear that the production of capers in large quantities is limited not by the growing conditions but by problems connected with preparation and rooting of the seedlings.

From the above, it is evident that caper plant is problematic to cultivate not so because it is demanding, but because their natural conditions must be reproduced exactly to ensure that they germinate and root.

Once rooting has taken place, growing of caper does not show any problems related to cultivation.

The object of the present invention is therefore to make available a process for the production of caper plants (*Capparis spinosa* L, subsp. *rupestris (SM.) Nyman*.), which influences all the ontogenetic phases from germination right through to the adult plant, in particular permitting a high germination rate.

A further object of the present invention is to make available a process for the production of caper plants from seed which permits the planting of extensive cultivations both by transplant of seedlings and by direct seeding, with significant reduction in plant mortality.

### DESCRIPTION OF THE INVENTION

These and further objects and relative advantages which will be better highlighted below are achieved by means of a process which comprises, as one of its essential stages, interruption of the physiological dormancy of the caper seeds with consequent increase in seed germination. The process according to the invention overcomes the limits of the known technique as it ensures a high seed germination rate, even 98%. Due to this high seed germination rate, it is possible to grow capers outdoor also by means of direct sowing.

The present invention therefore offers numerous advantages including, for example, reduction of planting costs, the possibility of obtaining greater plant vitality and resistance for optimal development of the embryonic root system and the availability of a large number of seedlings.

By using the process according to the present invention, it is also possible to obtain planting schemes predisposed for mechanical harvesting. This aspect is important since capers are currently harvested only manually, with consequent high labour costs and significantly longer harvesting times.

The process according to the invention involves a treatment that interrupt the embryonic physiological dormancy of the seeds.

In particular, the process according to the invention comprises the following phases:
a) harvesting of the berries, containing pulp and seeds, at the full ripening stage
b) fermentation of said pulp containing the seeds
c) washing of said seeds
d) sorting of the full seeds from the empty ones
e) dehydration of the seeds
f) photo-exposure of the seeds
g) chemical scarification of the seeds
h) sowing

In particular, according to the present invention, said sowing phase h) is advantageously performed in the field, but also in the phytocell made of non-woven fabric, in transparent boxes, said sowing operations all being performed under the direct action of sunlight or artificial light.

In particular, the process according to the invention comprises a first phase a) of harvesting of the seeds, which are advantageously collected en masse together with the pulp when the whole ripe berry is picked. Said subsequent phase b) involves bacterial fermentation of the pulp inside the berry until complete deliquescence of the parenchyma. At this point, the seeds are freed from the remains of the pulp and berry walls by means of repeated washing in spring water (phase c)), until complete elimination of the organic residues. Separation of the vital seeds, according to phase d) of the process according to the invention, is obtained by density in distilled water, collecting the seeds that have precipitated onto the bottom. The seeds thus obtained are then dried, according to said phase e), until they are dehydrated, for example by air-drying in the sunlight. The seeds are then stored in a thin layer, according to said phase f), for example in boxes or transparent containers and exposed to daylight or artificial light. At this point, once 30 to 60 days have elapsed, the seeds treated as above are ready for sowing either directly or after preventive chemical scarification treatment of the integument with sulphuric acid. For the preparation of seedlings, the seeds are left to germinate in growing pots or Petri dishes on polypropylene non-woven substrate with the addition of aqueous solution of GA₃ at 500 p.p.m directly exposed to daylight or artificial light.

Preferably, again according to the present invention, treatment of the seeds to obtain interruption of the dormancy, is performed according to the phases described below in greater detail, i.e.:
a) the berries containing the seeds must be harvested when fully ripe, and this can be detected by the spontaneous formation of a dorsal crevice in the pericarp.
b) the berries, ripe and therefore with a high water content, are placed in open containers and exposed to the air to promote bacterial fermentation and so deliquescence of the pulp containing the seeds.
c) the seeds are carefully washed, for example using spring water, to eliminate remains of the pulp and pericarp.
d) the full vital seeds are separated, for example densimetrically, from the non-viable ones in distilled water. When placed in distilled water, the fresh seeds that are completely formed and vital will precipitate to the bottom of the container whereas the non-viable incomplete ones will float to the surface. This treatment permits the selection of 98-100% vital seeds.
e) the seeds are dehydrated at room temperature and in the sunlight, ensuring optimal conservation of their vitality and preventing alterations by bacteria and fungi; at the same time, exposure to the light initiates the processes underlying interruption of the physiological dormancy of the embryo.
f) to interrupt the dormancy, the seeds are kept in transparent boxes or containers at ambient temperature, in daylight or artificial white light at a temperature between 9 and 25°C for at least 30 days before being left to germinate.
g) the seeds are scarified, for example with concentrated sulphuric acid for 30-40 minutes at a temperature of 20°C; this makes the seminal integument easily permeable thus ensuring quicker germination of the seeds. This treatment therefore produces germination in advance with respect to the germination that occurs in natural conditions.
h) Sowing can then be performed in the field with seeds pre-treated by chemical scarification and photo-exposure to interrupt the embryonic physiological dormancy. This produces germination and ontogenesis of the seedlings in a period in which there is a high rainfall in the Mediterranean climate, thus aiding root growth. Sowing in the field is performed preferably in October or November for reasons connected with the water content of the soil which must be in a state of saturation of the field moisture capacity. The plants are planted at a distance of 1 m along the row and 1.5 m between rows.

Sowing in phytocells made of non-woven fabric with diameter of 5 cm and length 20 cm is performed to obtain nursery seedlings for outdoor planting in January to ensure a long period of water stability in the ground, thus favouring reliable rooting.

Sowing in transparent glass or plastic boxes is performed to obtain seeds with the roots emerging which are then transferred either to phytocells or to the field in order to obtain seedlings with reliable rooting. This process means that outdoor planting can take place in the autumn (October-November) and ensures a high percentage of establishment of the seedlings due to the prolonged availability of water in the following winter-spring period.

Comparative experiments have been conducted to verify the essential process condition for obtaining a high germination rate, allowing for direct sowing of the seeds without incurring the drawbacks already cited in relation to the traditional methods according to the known technique.

It was observed that in the case of caper seeds germinated in conditions of constant humidity and temperature, in a temperature range between 5 and 25°C, the germination rate was 0.5%.

When, on the other hand, the caper seeds are treated according to the process of the invention, and in particular when, during said phase f) the seeds are treated with white light, for example obtained via the use of two 20W tubes positioned at a distance of 20 cm, or in daylight, for 30-60 days followed by phase g) in which chemical scarification ensures that the seed integument is highly permeable to water, high germination rates are recorded, even 85-98%, in the period December-January.

Again according to the process of the invention, in phase h) of outdoor germination, after undergoing acid scarification treatment and being exposed to the light as described, when the seeds are placed on the surface of the ground, preferably embedded but not covered they have a germination rate of up to 90%.

Implementing the process according to the invention again in phase h) relative to sowing in phytocells made of non-woven fabric, it is possible to obtain a large number of seedlings suitable for transplanting, according to the planting scheme described previously in the open field, by the end of October ensuring reliable rooting and establishment without irrigation in the dry summer period.

Thus, advantageously according to the process of the invention, the caper seedling becomes productive in the third year after sowing and the production of buds is high in the fifth year, in proportion to the number of branches developed by the plant.

### DESCRIPTION OF THE FIGURES

Figure 1 describes the percentage of seeds with integument intact germinated in the dark, at a constant temperature of 9°C and at variable pH.
Figure 2 describes the germination rate of seeds with integument intact in the dark, at a constant temperature of 20°C and at variable pH.

The present invention is better illustrated via the examples, given below, which are in no way limiting.

### EXAMPLE 1 - Germination of the seeds in the dark and at different constant temperatures.

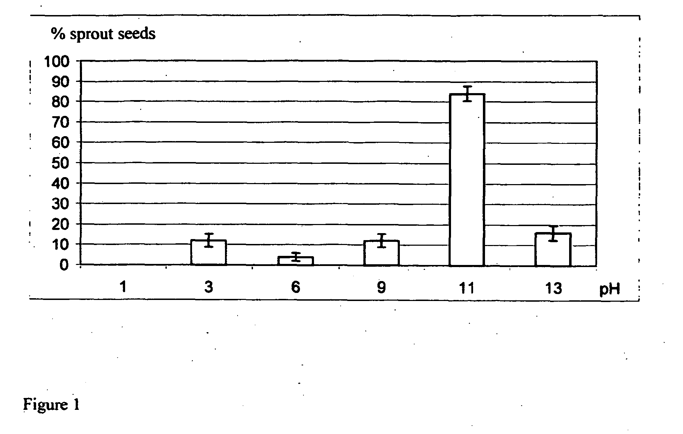

The seeds with integument intact are planted immediately after collection from ripe berries; at the different constant temperatures of 6, 9, 12, 15, 20, 25, 30°C, and constant pH of 7.2 they were dormant (Figure 1).

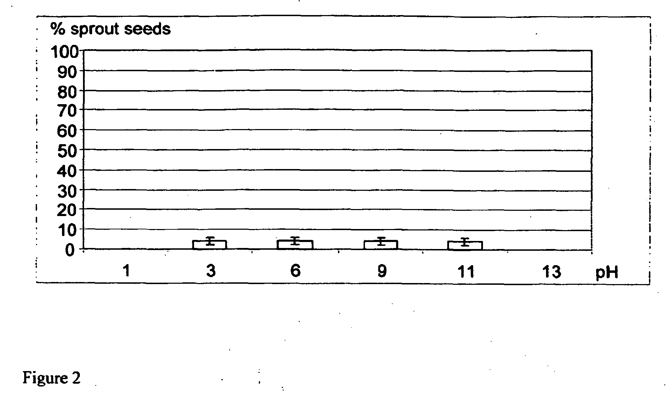

Low germination rates were recorded at the constant temperatures of 9 and 20°C, while after 14 months from planting, at the temperatures of 6, 12, 15, 25, 30°C there was no germination. At the temperature of 9°C germination required 390 days with a germination rate of 17%, which represents the total number of seeds germinated; at the temperature of 20°C germination required 69 days with a rate of 7% which represents the total number of seeds germinated. There was no germination of the whole caper seeds in the dark except for very low percentages in certain non-significant batches demonstrating that the caper seed is photodormant (Figure 2).

### EXAMPLE 2 - Germination of seeds with fractured integument.

The mechanically scarified seeds were planted at constant temperatures of 20 and 25°C, as these were considered the most effective temperatures for the purposes of germination, and variable pH.

At the temperature of 20°C and pH 9, germination required 34 days with a germination rate of 56% which represents the total number of seeds germinated; at pH 10, germination began after 36 days from planting with a total of 48% of seeds germinated; at pH 11, germination began on the 36^{th} day with a total of 32% of seeds germinated.

At the temperature of 25°C and pH 9 after 34 days from planting a total of 52% of the seeds had germinated; at pH 10 after 35 days from planting, 52% germination of the seeds was observed; at pH 11 after 36 days from planting, 32% germination of the seeds was observed, which became a total of 52% on the 50^{th} day from planting.

On the basis of the results obtained it was observed that 25°C is a more effective temperature than 20°C. The effects of the pH at values between pH 1 and pH 13 were tested, excluding those already tested previously.

At the temperature of 25°C and pH 1 and 2 there was no germination after 14 months from planting; at pH 3 after 29 days there was an 8% germination which represents the total number of seeds germinated; at pH 4 after 29 days from planting, 4% of seeds had germinated, reaching 8% after 56 days from planting and representing the total number of seeds germinated; at pH 5 after 29 days, 48% of the seeds had germinated; at pH 6 after 30 days from planting, 44% of the seeds had germinated; at pH 12 after 32 days from planting 36% of the seeds had germinated, reaching 44%, the total number of seeds germinated, on the 39^{th} day; at pH 13 after 30 days from planting, 44% of the seeds had germinated.

From the results obtained it was observed that the seeds with fractured integument germinated in the dark but the discordance of the data obtained at the different temperatures and pH values indicates that mechanical scarification of the caper seeds and pH are not decisive factors for physiological dormancy.

### EXAMPLE 3 - Germination in the dark of seeds with fractured integument after a pre-treatment of 108 hours of solar radiation.

Tests conducted on the germination of seeds at different sunlight exposure times highlighted a high germination rate in the dark (90%) which establishes that caper seeds are photodormant. The tests on seeds with fractured integument were performed in order to reduce average germination times but there was actually no difference in the germination rates of these seeds compared to those with integument intact.

### EXAMPLE 4 - Germination of seeds with fractured integument in daylight after a pre-treatment of 108 hours of solar radiation.

The whole seeds pre-treated immediately after collection with 108 hours of daylight were left to germinate in natural cycle daylight conditions after fracturing the integument at the level of the embryonic root. The emergence of the root occurred 98% after 6 days from planting; a complete seedling with sinker root and two cotyledonal leaves formed 15 days after planting. This result enables us to establish that light determines interruption of the physiological dormancy and that mechanical scarification accelerates the germination processes.

## Claims

1. Process for outdoor planting and cultivation of capers (*Capparis spinosa L.. subsp. rupestris (SM) Nyman*.) comprising the following phases:
a) harvesting of the berries
b) fermentation of said berries, obtaining a fermented mass
c) washing of said fermented mass, freeing the seeds from the organic residues
d) sorting of said seeds to separate the full seeds from the empty seeds
e) dehydration of said seeds
f) photo-exposure of said seeds
g) optional scarification of said seeds
h) direct sowing of said seeds

2. Process as claimed in claim 1, **characterised in that** said photo-exposure (phase f)) is performed by exposure to daylight and/or artificial white light.

3. Process as claimed in claim 2, **characterised in that** said artificial white light is obtained by using at least two 20W tubes positioned at a distance of 20 cm, for a period of at least 30 days.

4. Process as claimed in claim 1, **characterised in that** said fermentation (phase b)) is a bacterial fermentation.

5. Process as claimed in claim 1, **characterised in that** said scarification (phase g)) is performed by means of treatment in concentrated sulphuric acid at a temperature of 20°C.

6. Process as claimed in claim 1, **characterised in that**: said harvesting (phase a)) is performed by picking the whole ripe berries, said washing (phase c)) is performed in water, said separation (phase d)) is performed by densimetric separation and said dehydration (phase e)) is performed by drying in the open air.

7. Process as claimed in claim 1, **characterised in that** said sowing (phase h)) is performed in the field, in phytocells made of non-woven fabric or in transparent boxes, under direct sunlight and/or artificial light.

8. Process as claimed in claim 7, **characterised in that** said phase h) is performed directly in the field or in growing pots for the preparation of seedlings.

9. Caper seed **characterised by** interruption of the physiological dormancy which can be obtained according to the process claimed in claim 1.

10. Caper (*Capparis spinosa L.* subsp. *rupestris (*SM) *Nyman.)* obtained from seed as claimed in claim 9.

11. Use of seeds as claimed in claim 9 for direct seeding.

12. Use as claimed in claim 11 for outdoor direct seeding.
